# EUROPÄISCHE PATENTANMELDUNG

(11) **EP 1 103 364 A1**
(43) Veröffentlichungstag der Anmeldung: **30.05.2001**
(21) Anmeldenummer: 00124134.8
(22) Anmeldetag: 07.11.2000
(51) Int. Cl.: B29C 45/56, B29C 45/27, B29C 45/28

(54) **Verfahren und Vorrichtung zum Erwärmen eines Kunststoffpfropfens**

(30) Priorität: 23.11.1999 DE 19956212
(71) Anmelder: Otto Männer Heisskanalsysteme GmbH & Co. KG, 79353 Bahlingen (DE)
(72) Erfinder: Männer, Hans Peter, 79353 Bahlingen (DE); Selak, Vincenc, 77704 Oberkirch (DE)
(74) Vertreter: Schmitt, Hans, Dipl.-Ing.

(57) **Zusammenfassung**

Zum Warmhalten oder Erwärmen eines an der Mündung 2 einer offenen Spritzdüse 1 einer Spritzgießform 4 befindlichen oder entstehenden Kunststoffpfropfens und zur Verminderung der Viskosität des dort befindlichen Kunststoffes wird eine in der offenen Spritzdüse 1 befindliche Nadel 5 in ihrer Längsrichtung mit großer Frequenz hin- und herbewegt, so daß die im Mündungsbereich der Spritzdüse 1 befindliche Spitze der Nadel 5 in dem sich dort befindenden Kunststoff oder Kunststoffpfropfen Reibungswärme erzeugt, wobei die oszillierende Bewegung der Nadel 5 in ihrer Längserstreckungsrichtung und damit auch in Längserstreckungsrichtung der Spritzdüse 1 erfolgen kann. Dabei genügen geringfügige Bewegungen von weniger als einem Millimeter.

## Beschreibung

Die Erfindung betrifft ein Verfahren zum Warmhalten oder Erwärmen eines an der Mündung einer offenen Spritzdüse einer Spritzgießform beispielsweise zwischen zwei Spritzvorgängen entstehenden Kunststoffpfropfens.

Ferner betrifft die Erfindung eine Vorrichtung zum Warmhalten oder Erwärmen eines an der Mündung einer offenen Spritzdüse befindlichen Kunststoffes oder Kunststoffpfropfens insbesondere zur Durchführung des genannten Verfahrens.

Offene Spritzdüsen sind bekannt und enthalten in der Regel eine Nadel, die in die Düsenmündung reicht und beheizt werden kann, um dort vorhandenen Kunststoff warmzuhalten oder einen in diesem Bereich entstandenen Kunststoffpfropfen wieder erwärmen zu können. Dieses System ist aber träge, weil bei einer Erwärmung beispielsweise auf elektrischem Wege die Wärme mittels der Nadel von einer Heizung bis zur Nadelspritze geleitet werden muß und außerdem ist dann ein Wärmeübergang von der Nadel zu dem Kunststoff erforderlich, was nur mit Verlusten möglich ist. Gleichzeitig bedeutet dies, daß die gesamte Nadel erwärmt werden muß, obwohl nur an ihrer Spitze Wärme benötigt wird. Außerdem ist mit dem Erwärmen der Nadel und dem Zuleiten der Wärme von der Heizung zu der Nadelspitze ein Zeitverlust verbunden, der insbesondere dann, wenn ein erkalteter Kunststoff-pfropfen wieder erwärmt werden muß, die Arbeitsgeschwindigkeit beeinträchtigt.

Es besteht deshalb die Aufgabe, ein Verfahren und auch eine Vorrichtung der eingangs genannten Art zu schaffen, womit ein an der Mündung der Spritzdüse befindlicher Kunststoff-Pfropfen effektiver warmgehalten oder ein erkalteter Kunststoffpfropfen schnell wieder erwärmt werden kann.

Zur Lösung dieser Aufgabe ist das eingangs genannte Verfahren dadurch gekennzeichnet, daß eine in der offenen Spritzdüse befindliche Nadel in ihrer Längsrichtung mit hoher Frequenz hin- und herbewegt wird, so daß die im Mündungsbereich der Spritzdüse befindliche Spitze der Nadel in dem sich dort befindenden Kunststoff oder Kunststoff-pfropfen Reibungswärme erzeugt.

Somit kann gezielt an der Stelle, wo es notwendig ist, nämlich an der Mündung der Spritzdüse, die erforderliche Wärme gezielt und ohne die Notwendigkeit einer längeren Wärmeübertragung erzeugt und entsprechend schnell auch an den Kunststoff abgegeben werden, indem diese Wärme aufgrund der gegenseitigen Reibung zum Teil direkt entsteht.

Dabei ist es zweckmäßig, wenn die Nadel weniger als einen Millimeter, gegebenenfalls weniger als einen halben Millimeter hin- und herbewegt wird. Eine entsprechend hohe Frequenz ist möglich, so daß an der erforderlichen Stelle auf kleinstem Raum eine effektive Wärmeentwicklung stattfinden kann.

Die Nadelspitze kann aus einer mit der Düsenmündung bündigen Lage in die sich anschließende Kavität hineinbewegt und wieder zurückgezogen werden. Somit wird die Reibungswärme zwischen der Nadelspitze und einem im unmittelbaren Anschluß an die Mündung der Spritzdüse befindlichen Kunststoffpfropfen gezielt dort erzeugt, wo ein erkalteter Kunststoffpfropfen störend ist.

Zweckmäßig ist es, wenn die Nadel oszillierend in ihrer Längsrichtung schnell hin- und herbewegt wird. Es ergeben sich somit regelmäßige Hin- und Herbewegungen der Nadel mit hoher Frequenz, die eine entsprechend große Reibungswärme in dem beaufschlagten Kunststoff bewirken.

Die zur Lösung der Aufgabe dienende Vorrichtung der eingangs genannten Art ist dadurch gekennzeichnet, daß eine in der offenen Düse befindliche Nadel hin- und herbewegbar angeordnet und ein an dieser Nadel angreifender Schwinger vorgesehen ist, dessen Schwingungen in Längsrichtung der Nadel auf diese übertragbar oder in Längsbewegungen der Nadel umwandelbar sind. Somit ergibt sich eine offene Spritzdüse mit einer Nadel, die in Längserstreckungsrichtung schnell hin- und herbewegt werden kann, so daß ihre Spitze gegenüber einem Kunststoff, in welchen diese Spitze eingreift, Reibungswärme erzeugen und damit den Kunststoff warmhalten oder wieder erwärmen kann.

Der Schwinger kann ein Ultraschallgeber sein. Solche Ultraschallgeber sind preiswert und ermöglichen eine hohe Frequenz, so daß die Nadel entsprechend schnell hin- und herbewegt werden kann.

Eine abgewandelte Ausführungsform kann darin bestehen, daß der Schwinger ein Piezo-Aktor oder ein Piezo-Translator ist, mit welchem durch elektrische Spannung oder Spannungsänderungen die Nadel axial bewegbar ist. Je nach Beaufschlagung dieses Piezo-Aktors oder Piezo-Translators kann also die Nadel hin- und herbewegt, aber auch einfach nur verstellt und in einer gewünschten Lage gehalten werden.

Beispielsweise kann die Nadel mittels gleichbleibender Gleichspannung an den Piezo-Aktor in eine gleichbleibende Lage bringbar und in dieser festlegbar sein, so daß die Nadel zum Beispiel so eingestellt werden kann, daß zwischen ihr und der Düsenmündung nur ein kleiner Spalt frei bleibt. Ein an dieser Stelle erkaltender Pfropfen hat dann nur ein sehr geringes Volumen und kann durch die Reibungswärme, die durch eine anschließende Hin- und Herbewegung der Nadel in erfindungsgemäßer Weise erzeugt werden kann, schnell wiedererwärmt werden. Außerdem kann in einer entgegengesetzten Positionierung, in der die Nadel aus der Düsenöffnung so weit wie möglich zurückgezogen gehalten wird, eine entsprechend große Düsenöffnung für einen schnellen Spritzvorgang freigegeben werden. Dabei kann eine solche zurückgezogene Position beispielsweise bei spannungslosem Zustand des Piezo-Aktors erreicht werden, wofür es zweckmäßig ist, daß die Nadel aus der Düsenöffnung durch eine Rückstellkraft insbesondere in spannungslosem Zustand des Piezo-Aktors zurückziehbar ist.

Die Nadel kann außerdem mittels an dem Piezo-Aktor wirkender Wechselspannung oszillierend hin- und herbewegbar sein, um die gewünschte Reibungswärme zu erzeugen.

Insgesamt ist es also möglich, durch Koppelung der stehenden Düsennadel einer Heißkanaldüse beziehungsweise einer offenen Spritzdüse mit Hilfe eines Schwingers, zum Beispiel eines Piezo-Translators, Frequenzen auf die Düsennadel zu übertragen, die diese in geeignete Schwingungen versetzt, durch welche die sie umgebende Kunststoffmasse mittels äußerer Reibung erwärmt oder zumindest zusätzlich erwärmt wird, wenn außerdem Heizenergie zugeführt wird.

Die Wärmeenergie dient dann dazu, die Viskosität der Schmelze um die Nadel herum zu verringern, wodurch ein besserer Schmelzfluß unter geringerem Druckverlust erfolgen kann. Da die Erwärmung entlang der gesamten Nadel stattfinden kann, kann der Bereich der Düsenspitze, der in üblichen Systemen nicht beheizt ist, aufgeschmolzen werden, das heißt dort kann auch erkalteter Kunststoff wieder zum Schmelzen gebracht werden.

Durch gezielt einzusetzende Schwingungen kann also der Anbindungsbereich vor Einspritzbeginn aufgeschmolzen werden, so daß ein sich üblicherweise bei offenen Systemen bildender kalter Pfropfen minimiert oder gar vermieden wird. Auch kann hierdurch bei einer Mehrkavitätenform eine gleichmäßigere Füllung erfolgen. Die beim Betätigen der Nadel benötigten Frequenzen beziehungsweise Amplituden lassen sich mittels eines Leistungsverstärkers auf verschiedene Kunststoffsorten einstellen.

Die Verwendung des Piezo-Aktors hat einerseits den Vorteil, daß mit Hilfe einer konstanten Gleichspannung je nach Länge des Piezo-Aktors oder -Translators die Position der Düsennadel variiert werden kann. Während der Einspritzphase kann die Nadel in ihrer hinteren beziehungsweise zurückgezogenen Position bleiben, so daß ein entsprechend großer Ringspalt zur Verfügung steht und ein scherungsarmes Einspritzen erfolgen kann. Bei Nachdruckende wird die Nadel mittels Anlegen einer Gleichspannung am Piezo-Aktor oder Piezo-Translator in eine vordere Position gebracht, wodurch sich der Ringspalt verkleinert und ein schnelleres "Einfrieren" der Anbindung möglich ist. Ferner können auch beide Effekte, nämlich Erwärmung und Positionierung, kombiniert zur Anwendung kommen.

Wird die Düsennadel in schon erwähnter Weise mit einem Ultraschallgeber verbunden, kann unter Berücksichtigung der unter die Frequenz fallenden Massen eine so hohe Reibung innerhalb der Düsennadel erzeugt werden, daß diese zu einer hohen Eigenerwärmung führt. Die Wärmenergie kann dann an die die Düsennadel umschließende Kunststoffmasse weitergegeben werden, wodurch sich dieselben Effekte wie bei der Anwendung eines Piezo-Aktors oder Piezo-Translators ergeben.

Nachstehend ist ein Ausführungsbeispiel der Erfindung anhand der Zeichnung näher beschrieben. Es zeigt in schematisierter Darstellung:
- Fig. 1: einen Ausschnitt einer Spritzgießform mit einer offenen Spritzdüse und einer in deren Inneren befindlichen Nadel, die an ihrem der Düsenmündung abgewandten Ende von einem Piezo-Translator oder Piezo-Aktor beaufschlagt ist,
- Fig.2: in vergrößertem Maßstab einen Längsschnitt der Düsenmündung mit der Nadelspitze, die dabei bündig mit der Düsenmündung ist, sowie
- Fig.3: eine der Fig.2 entsprechende Darstellung, bei welcher die Nadelspitze gegenüber der Düsenmündung vorgeschoben ist, wobei die Nadel zwischen den Positionen gemäß Fig.2 und 3 hin- und herbewegbar ist.

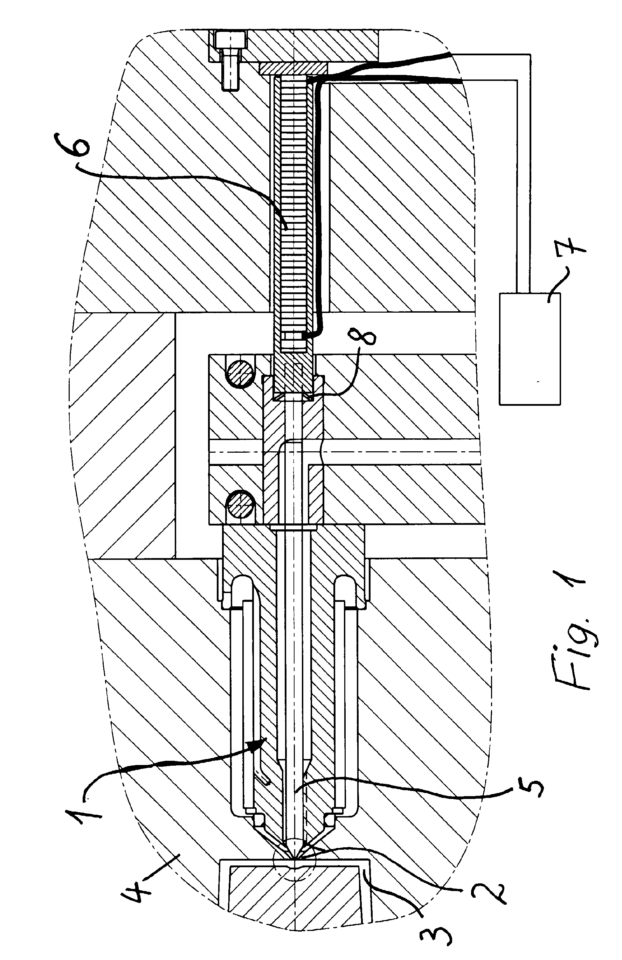

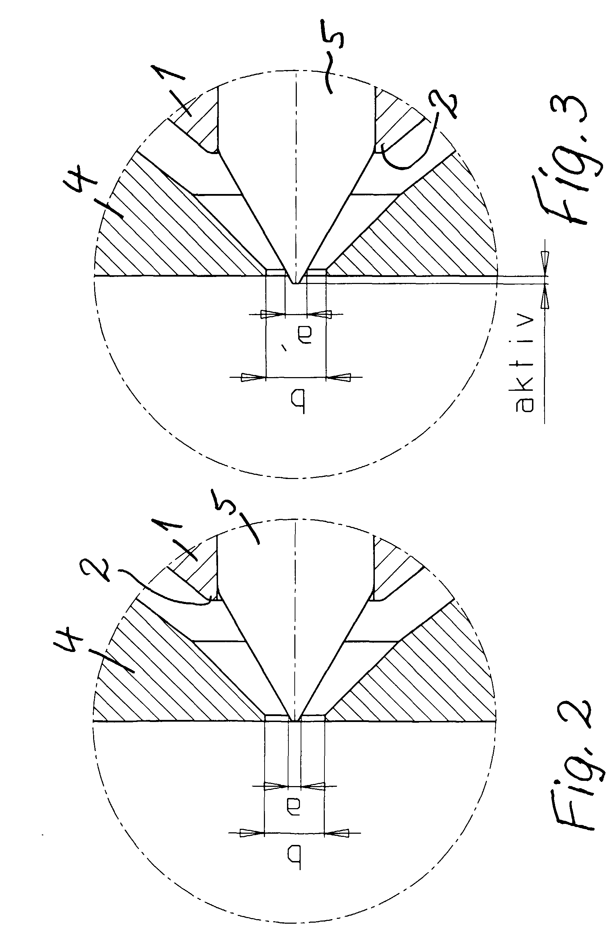

Eine im ganzen mit 1 bezeichnete offene Spritzdüse 1 befindet sich mit ihrer Mündung 2 an einer Kavität 3 einer Spritzgießform 4. In der Spritzdüse 1, im folgenden auch "Düse 1" genannt, befindet sich eine Nadel 5, die zumindest um einen geringen Betrag gemäß der Differenz der in Fig.2 und 3 dargestellten Positionen hin- und herbewegbar ist. Gemäß Fig.1 greift an dieser Nadel an ihrem der Mündung 2 abgewandten Ende ein Schwinger an, dessen Schwingungen in Längsrichtung der Nadel 5 auf diese übertragbar und in entsprechende Hin- und Herbewegungen der Nadel 5 umwandelbar sind. Der Schwinger könnte ein Ultraschallgeber sein, ist im Ausführungsbeispiel jedoch ein Piezo-Aktor oder Piezo-Translator 6, wobei es sich um ein handelsübliches Teil handelt, das je nach Länge unterschiedlich große Bewegungen verursachen kann. Durch elektrische Spannung oder Spannungsänderungen und mit Hilfe eines Leistungsverstärkers 7 kann die Nadel 5 aufgrund der sich ergebenden Bewegungen des Piezo-Aktors 6 entsprechend axial bewegt werden, wobei sie mit ihrem Ende so eingespannt ist, daß einer Bewegung in die Kavität 3 hinein (vgl. Fig.3) eine entgegengesetzte Gegenbewegung folgt. Dabei kann die Nadel 5 aus der Düsenöffnung durch eine Rückstellkraft, beispielsweise eine Tellerfeder 8 zurückziehbar sein, die bei spannungslosem Zustand des Piezo-Aktors wirksam wird.

Die Nadel 5 kann mittels an dem Piezo-Aktor wirkender Wechselspannung oszillierend hin- und herbewegt werden, so daß in ihrem Bereich befindlicher Kunststoff durch Reibungswärme warmgehalten oder erwärmt und dadurch in seiner Viskosität vermindert wird.

Zum Warmhalten oder Erwärmen eines an der Mündung 2 einer offenen Spritzdüse 1 einer Spritzgießform 4 befindlichen oder entstehenden Kunststoffpfropfens und zur Verminderung der Viskosität des dort befindlichen Kunststoffes wird eine in der offenen Spritzdüse 1 befindliche Nadel 5 in ihrer Längsrichtung mit großer Frequenz hin- und herbewegt, so daß die im Mündungsbereich der Spritzdüse 1 befindliche Spitze der Nadel 5 in dem sich dort befindenden Kunststoff oder Kunststoffpfropfen Reibungswärme erzeugt, wobei die oszillierende Bewegung der Nadel 5 in ihrer Längserstreckungsrichtung und damit auch in Längserstreckungsrichtung der Spritzdüse 1 erfolgen kann. Dabei genügen geringfügige Bewegungen von weniger als einem Millimeter.

## Patentansprüche

1. Verfahren zum Warmhalten oder Erwärmen eines an der Mündung (2) einer offenen Spritzdüse (1) einer Spritzgießform (4) beispielsweise zwischen zwei Spritzvorgängen entstehenden Kunststoffpfropfens, **dadurch gekennzeichnet,** daß eine in der offenen Spritzdüse (1) befindliche Nadel (5) in ihrer Längsrichtung mit hoher Frequenz hin- und herbewegt wird, so daß die im Mündungsbereich der Spritzdüse (1) befindliche Spitze der Nadel (5) in dem sich dort befindenden Kunststoff oder Kunststoffpfropfen Reibungswärme erzeugt.

2. Verfahren nach Anspruch 1, dadurch gekennzeichnet, daß die Nadel (5) weniger als einen Millimeter, gegebenenfalls weniger als einen halben Millimeter hin- und herbewegt wird.

3. Verfahren nach Anspruch 1 oder 2, dadurch gekennzeichnet, daß die Nadelspitze aus einer mit der Düsenmündung (2) bündigen Lage in die sich anschließende Kavität (3) hineinbewegt und wieder zurückgezogen wird.

4. Verfahren nach einem der Ansprüche 1 bis 3, dadurch gekennzeichnet, daß die Nadel (5) oszillierend in ihrer Längsrichtung schnell hin- und herbewegt wird.

5. Vorrichtung zum Warmhalten oder Erwärmen eines an der Mündung einer offenen Spritzdüse (1) befindlichen Kunststoffes oder Kunststoffpfropfens, insbesondere zur Durchführung des Verfahrens nach einem der vorstehenden Ansprüche, dadurch gekennzeichnet, daß eine in der offenen Düse (1) befindliche Nadel (5) hin- und herbewegbar angeordnet und ein an dieser Nadel (5) angreifender Schwinger vorgesehen ist, dessen Schwingungen in Längsrichtung der Nadel (5) auf diese übertragbar oder in Längsbewegungen der Nadel (5) umwandelbar sind.

6. Vorrichtung nach Anspruch 5, dadurch gekennzeichnet, daß der Schwinger ein Ultraschallgeber ist.

7. Vorrichtung nach Anspruch 5, dadurch gekennzeichnet, daß der Schwinger ein Piezo-Aktor (6) oder Piezo-Translator ist, mit welchem durch elektrische Spannung oder Spannungsänderungen die Nadel (5) axial bewegbar ist.

8. Vorrichtung nach Anspruch 7, dadurch gekennzeichnet, daß die Nadel (5) mittels gleichbleibender Gleichspannung an dem Piezo-Aktor (6) in eine gleichbleibende Lage bringbar und in dieser festlegbar ist.

9. Vorrichtung nach einem der Ansprüche 5 bis 8, dadurch gekennzeichnet, daß die Nadel (5) aus der Düsenöffnung durch eine Rückstellkraft, insbesondere in spannungslosem Zustand des Piezo-Aktors (6), zurückziehbar ist.

10. Vorrichtung nach einem der Ansprüche 5 oder 7 bis 9, dadurch gekennzeichnet, daß die Nadel mittels an dem Piezo-Aktor wirkender Wechselspannung oszillierend hin- und herbewegbar ist.
